# EUROPEAN PATENT SPECIFICATION

(11) **EP 2 806 193 B1**
(45) Date of publication and mention of the grant of the patent: **01.03.2017**
(21) Application number: 14151072.7
(22) Date of filing: 14.01.2014
(51) Int. Cl.: F16J 15/46

(54) **Seals**
Dichtungen
Joints

(30) Priority: 21.05.2013 GB 201309172
(43) Date of publication of application: 26.11.2014
(73) Proprietor: Northern Engineering (Sheffield) Limited, Sheffield, Yorkshire S25 2JY (GB)
(72) Inventor: Allport, Darren, Sheffield, Yorkshire S25 2JY (GB)
(74) Representative: Moore, Christopher Mark

(56) References cited:
- DE-C1- 4 303 298
- DE-U1- 20 110 950
- US-A- 943 023
- US-A- 1 439 452
- US-A- 3 121 570
- US-A- 3 642 291

## Description

This invention relates to seals, specifically seals inflatable and/or expandable by the application of internal pressure to thereby effect a seal.

It is well known that rotatable shafts, for example those which extend through housings, require sealing. For example, if the rotatable shaft is part of a mixer it is usually necessary or desirable to seal the shaft to ensure that the components to be mixed do not egress the mixer along the shaft.

In order to seal a rotatable shaft it is known to use an inflatable seal which, upon the application of internal fluid pressure, inflates to effect a seal between the shaft and the housing, or for example, between the housing and a packing material which in turn bears against the shaft to effect a seal. It is desirable to ensure that there is sufficient seal/shaft contact to effect a seal but a low enough contact pressure to prevent wear of the shaft and/or seal and/or deleterious friction.

Examples of inflatable seals include US3642291, DE4303298, DE20110950, US1439452, US 943023 and US3121570.

In some circumstances the inflatable seal is an endless tube provided with a valve stem to allow the seal to be inflated and deflated. Whilst such seals may work well in practice, there is a problem insofar as installation and removal, e.g. for maintenance and repair, usually necessitates disassembly of the shaft or destruction of the seal.

In order to facilitate installation, maintenance or removal it has been proposed to use split endless rings. In this case, the two ends may be plugged or may remain open. In the latter case it is usual to insert one end of the tube into the other end to provide, in use, a fluid-tight fit.

Whilst both of these elongate bodies may improve the ease of installation and so on they are not without problems in use.

The principal issue is that when the seal is inflated the end region of the seal does not inflate to the same degree as the rest of the seal. This can lead to one of two problems.

Firstly, if the end region does not expand sufficiently there is a potential for the shaft to be incompletely sealed, i.e. a fluid flow path may be provided from one side to the other side of the seal.

Secondly, in order to ensure that there is no fluid flow path it may prove expedient to inflate the seal to an internal pressure sufficient to cause the ends to expand to the extent required to block any fluid flow-path. Such an internal pressure may increase the friction on the shaft leading to problems of wear of the seal and/or shaft, thereby increasing maintenance issues. Alternatively, the extra pressure may lead to an increase in the likelihood of seal failure upon inflation and/or use.

In order to mitigate and/or ameliorate the above-identified problems the current invention has been proposed.

In a first aspect of the invention there is provided a seal, for example an inflatable seal, the seal comprising an elongate hollow body which is sealed at at least one end by a sealing wall, wherein the hollow body has a minimum wall thickness X and the sealing wall has a maximum wall thickness Y and Y<X.

The relative dimensions of the wall thicknesses X and Y ensure that the seal can inflate equally along its entire length.

The seal is preferably provided with means to allow inflation and/or deflation thereof. A preferred means comprises a valve stem. The inflation/deflation means may be located towards one end of the seal, for example between 50 and 150 mm from one end of the seal, or may be located at the approximate middle of the seal, say from 40 to 60 % of the length of the seal.

Preferably, in a deflated state at least part of the sealing wall extends into or out of the hollow body, for example the sealing wall may be bowed, folded or concertinaed. The surface area of the sealing wall is preferably greater than that of the space defined between the walls of the hollow body, when viewed in transverse section.

In a seal arranged to work at low pressures (0.1 to 0.5 MPa, for example 0.15 to 0.3 MPa) the sealing wall may have a surface area which is between 25 and 75% bigger, for example from 30 to 60% bigger, than that defined between the walls of the seal, in transverse section. In a seal arranged to work at high or higher pressures (e.g. 0.5 to 1.0 MPa) the sealing wall may have a surface area which is between 1 and 50% bigger than that defined between the walls of the seal, in transverse section.

Upon inflation to a working pressure, preferably the sealing wall is placed under tension, for example it may be stretched, for example by 1 to 100%. The degree of stretch will typically be higher in high pressure seals than in low pressure seals.

Preferably, the seal comprises a flat lowermost bearing surface and a curved uppermost bearing surface. The flat lowermost bearing surface may have a wall thickness greater than X, e.g. 1.2X to 2.0X for low pressure seals. Preferably, upon inflation of the seal to a working pressure, the lowermost surface will not stretch or otherwise deform or change shape. Upon inflation of the seal to a working pressure, the uppermost surface may stretch.

The seal, upon inflation to a working pressure, and when unconstrained in the working direction, may expand, in the working direction, by up to twice its deflated height, say from 50 to 100% for a low pressure (0.1 to 0.5 MPa, for example 0.15 to 0.3 MPa) seal and by 1 to 50% for a high pressure (0.5 to 1.0 MPa) seal.

The seal is preferably formed by extrusion and the hollow body may be formed from natural or synthetic rubber, comprising both saturated and unsaturated rubbers, for example EPDM, silicone, flourosilicone, FKM, FEPM, Butyl, chloroprene, nitrile, polybutadiene and natural rubber. The closure walls are preferably formed using the same materials as those used to make up the walls. In certain embodiments, the closure walls may be secured to the hollow body by a vulcanisation process or the use of adhesives.

In another aspect of the invention there is provided a seal, the seal comprising a hollow elongate body having a flat base wall for sealing against a first surface and a curved upper wall for sealing against a second facing wall, the upper wall comprising a longitudinal rebated portion facing the flat base wall, the ends of the body being sealed by sealing walls. Preferably the elongate body has a minimum wall thickness X and the sealing walls have a maximum wall thickness Y, and X>Y.

In the aspects of the invention X may be from 1 to 10 mm, for example from 2 to 8 mm, say 3 to 5 mm. Y may be from 0.3 to 2.5 mm, say from 1.0 to 2.0 mm.

The invention shall now be described, by way of example only and with reference to the accompanying drawings, in which:
Figure 1 is a schematic cut away representation of a first embodiment of the invention;
Figure 2 is a perspective view of the embodiment of Figure 1;
Figure 3 is a sectional view of the first embodiment;
Figure 3A is an enlarged view of part of Figure 3;
Figure 4 is a transverse sectional view of the first embodiment, in use; and
Figure 5 is a schematic transverse section of the embodiment of Figure 1 in inflated and deflated configurations.

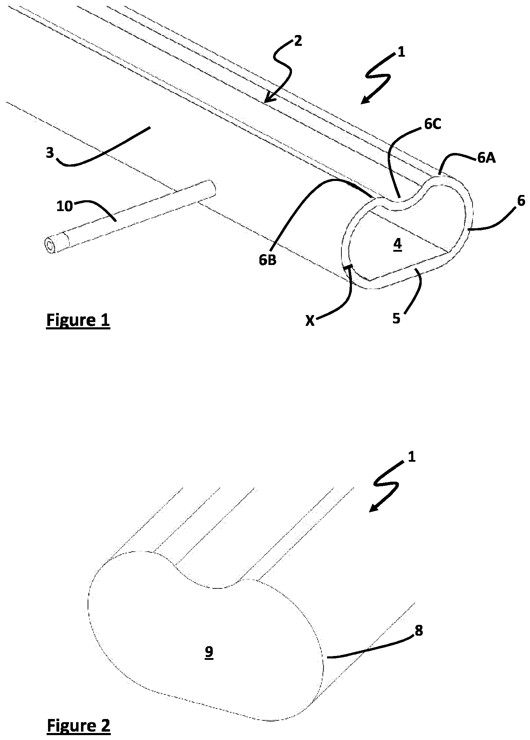

Referring first to Figure 1, there is provided a seal 1 comprising an elongate hollow body 2 formed by a peripheral wall 3 bounding a longitudinal central aperture 4.

The wall 3 has, in transverse sectional view, a flat lowermost portion 5 and a curved uppermost portion 6 extending from either side of the flat portion 5. The curved portion 6 has the form of a matched pair of lobes, 6A, 6B with a rebate 6C located between the peaks of the lobes 6A, 6B (the purpose of which shall be explained below), the curved portion 6 having the form of an inverted ω.

The body 2 has a wall thickness of at least X. Typically, X is from 1 to 10 mm, for example from 2 to 8 mm, say 3 to 5 mm. The flat, lowermost portion 5 may have a wall thickness which is greater than that of the curved portion 6, say from 5 to 10 mm, e.g. from 6 to 7 mm. The curved portion 6 preferably has a constant wall thickness of at least X. One or both of the flat portion 5 and curved portion 6 may have one or more surface formations, say outwardly extending surface formations, for example longitudinal continuous or discontinuous ribs, one or more projections, for example regular or irregular arrays of projections. Alternatively or additionally one or both of the flat portion 5 and curved portion 6 may have an outermost surface into which extend formations, for example elongate rebates.

Extending into the seal 1 is a tube 10. The tube 10 will usually house a valve (not shown) and provides fluid communication between a pressurised fluid source and the interval volume 4 of the seal 1 for the purposes of inflating the seal.

Turning to Figure, 2 there is shown an end 8 of the seal 1 which is closed by a closure wall 9.

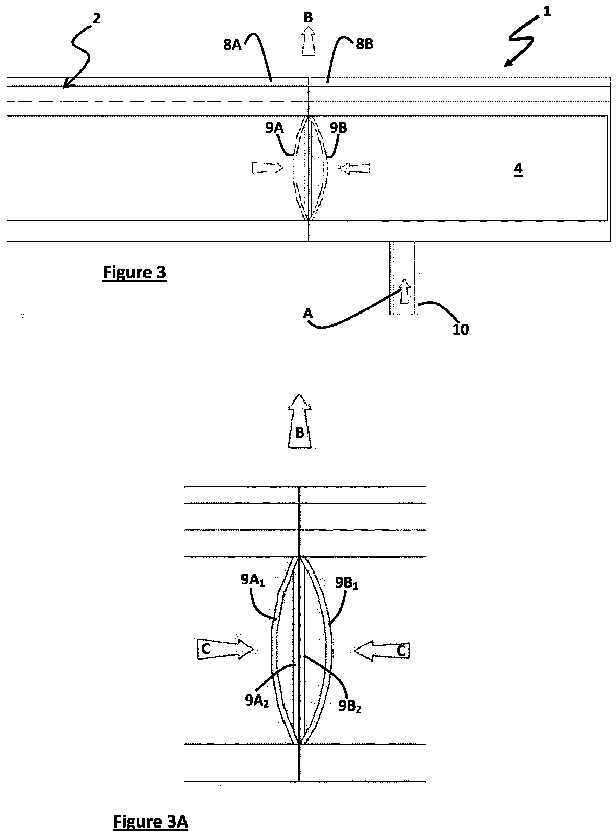

Referring to Figures 3 and 3A, there is shown a seal 1 of the invention having a first end 8A and a second end 8B the first end 8A and second end 8B being provided in abutting relations, such that the seal 1 forms, for example, a circle or other loop. The seal 1 at a first end 8A has a first closure wall 9A and at the second end 8B has a second closure wall 9B. The closure walls 9A and 9B are shown in respective first, bowed state 9A₁, 9B₁ and second, unbowed state 9A₂, 9B₂. Typically the closure walls 9A, 9B have a thickness Y, when the seal is not inflated, of from 0.3 to 2.5 mm, say from 1.0 to 2.0 mm.

The relaxed state (*i.e*. with the seal 1 not inflated) for the closure wall 9 at each of the ends 8A, 8B is the bowed state 9A₁, 9B₁.

Typically, the seal 1 is fabricated by extruding the hollow body 2 from rubber, preferably a silicone rubber. When a seal 1 of a certain size is required, an appropriate length of hollow body 2 is provided and closure walls 9 are secured within or to the ends by the use of a vulcanisation procedure. To do so, a length of the hollow body (which is fully cured) is contacted with a closure wall 9 (also cured). A joining compound, comprising uncured rubber, is provided at the interface between the parts and heat and pressure are applied to cure the joining compound and thereby secure the closure wall 9 to the wall 3 and form a seal 1.

In order to effect a fluid tight and/or effective seal between a part such as a shaft S and a housing H, the seal 1 is located adjacent to the housing H, and may be seated at least partially within a recess or rebate (not shown) provided on the shaft S or the housing H, typically the housing H.

Once installed, the ends 8A, 8B of the seal 1 are provided in mutually abutting relations.

As an inflating fluid is introduced to the internal volume 4 of the seal 1 via the tube 10, as indicated by arrow A, the seal 1 is caused to expand in the direction of arrow B and, as shown in Figure 4, bears against the surface of the housing H and the shaft S.

The seal 1 will typically be inflated to an internal pressure of 0.2 to 0.3 MPa. In most instances air will be used as the inflating fluid, although other gaseous and liquid fluids may also be employed.

To accommodate the expansive force of the ingressing fluid, the rebate 6C of the curved portion 6 of the wall 3 flexes outwards in the direction of arrow B to expanded state 6C' to bear against the surface of the shaft S, thereby effecting a seal between the housing H and the shaft S.

As well as the rebate 6C flexing outwardly to its expanded state 6C', the closure walls 9A and 9B are encouraged or caused to flex from their relaxed, bowed, first position 9A₁, 9B₁, to their expanded, unbowed, second positions 9A₂, 9B₂. It will be appreciated that in the expanded, second positions 9A₂, 9B₂ the two closures 9A, 9B bear against one another, mutually supporting each other against further expansion beyond the condition shown in Figure 3A. As will be appreciated, in the embodiment shown the pressure exerted on each of the closure walls 9A and 9B is identical and so one of the walls (e.g. 9A) will resist any deformation thereof occasioned by the other wall (e.g. 9B) and vice versa. It is usual for the closure walls 9A, 9B will be placed under slight tension when in their respective second positions 9A₂, 9B₂, for example such that the thickness of the closure walls 9A, 9B reduces from say 1.0 to 2.0 mm to 0.5 to 1.0 mm. It has been surprisingly found that the walls 9 effect a better seal when they are placed under tension. It is thought, although we neither wish nor intend to be bound by any theory, that applying tension to the walls 9 ensures that they adopt a suitable position for mutual support and effective sealing.

Because the material from which the closure walls 9A, 9B are made is relatively thin (as compared to the wall 3 of the seal 1) the closures 9A, 9B are able to adopt their second positions relatively easily, as compared to the flexing of the rebated portion 6C of the curved portion 6 of the wall 3. Therefore, as the inflating fluid enters the internal volume 4 the fluid exerts a force C on the closure walls 9 and a force D on the rebated portion 6C. The respective forces C and D force the wall of the curved portion 6 in the region of the rebate 6C to flex outwardly to an expanded state 6C' as the internal volume 4 expands. The expansion of the rebate 6C at and towards the ends 8A, 8B is accommodated by the closures 9A, 9B adopting the second, unbowed position 9A₂, 9B₂. Because the wall thickness of the closure is thin, as compared to thickness of the wall 3 of the body portion 2 of the seal 1 the closures 9A, 9B do not impede the flexing of the rebated portion 6C and expansion of the seal 1.

The relative thicknesses of the closure walls 9 and bearing walls ensures that the seal 1 expands uniformly along its entire length as fluid is forced into the aperture 4. Also, the abutting relations of the ends 8A, 8B ensures that the closure walls 9A, 9B mutually support one another against rupture. Moreover, because the seal 1 is formed as an elongate body, it is simple to install and/or remove for the purpose of installation, maintenance, cleaning and so on.

Upon inflation of the seal 1, the flexing described above occurs and the curved surface 6 will adopt a substantially rounded configuration in cross section. Continued inflation up to the working pressure will typically cause the walls 6 to stretch as the surface area defined between the walls expands. Maximum stretch is likely to occur in the region 6C', perhaps by as much as to half the thickness of the walls.

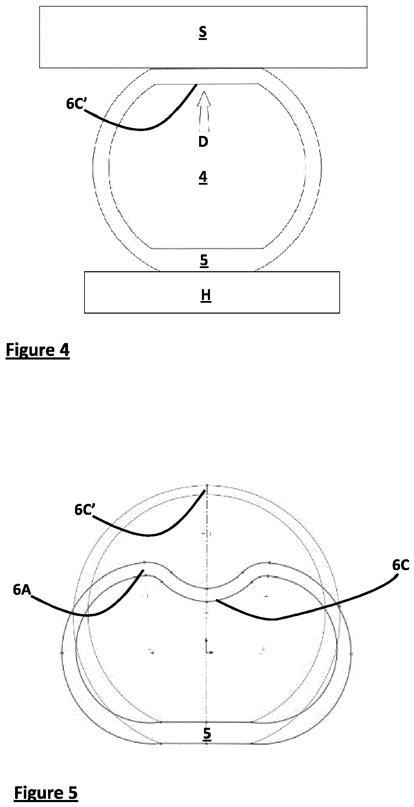

In one exemplary embodiment, as shown in Figure 5, the seal has, in its relaxed non-inflated state, a width of 88 mm, and a height, measured from the bottom wall 5 to the top of one of the lobes 6A of 53 mm, with a wall thickness X of 4 mm (the bottom wall 5 having a thickness of about 7 mm), and a wall thickness Y of 10 to 20 mm. The cross sectional area defined by the walls 3 is 4136 mm² and the cross sectional area of the closure wall 9 is ca 5500 - 6500 mm². Upon inflation, to an internal pressure of 0.2-0.3 MPa, the seal 1 has a width of 90 mm and a peak height, measured from the base wall 5 to the top of the unconstrained expanded rebate 6C', of 90 mm, and a surface area of 6670 mm². The larger wall thickness of the lower wall 5 ensures that this remains unchanged upon inflation. This is advantageous because it ensures the surface area of the lowermost contact face remains unchanged upon inflation. When this seal was installed in a 85 mm gap between a rotating shaft and a housing and inflated to a working pressure of 0.25 MPa the seal 1 exerted a sufficient sealing force whilst allowing the shaft to rotate at its optimum velocity.

With the seal 1 of Figure 5, fabricated from silicone rubber, the operating temperature will typically be up to 150°C, with an ambient environmental temperature of about 40 to 60 °C. It is possible to operate at higher temperatures but this may impair lifetimes.

As will be appreciated, the invention is not limited to the profile shape shown in the drawings. Other shapes, as appropriate for particular uses may be employed. The skilled person will be able to devise suitable profiles for different uses. For example, a pair of rebates (or more) may be provided in the curved portion 6, each being expandable upon the application of internal pressure.

For example, the above description with reference to Figure 5, relates to a relatively low pressure seal 1 with a comparatively large seal travel distance between deflated and inflated states (about 40mm in the above example). It is also possible to provide a seal which is inflated to much higher pressures, e.g. up to 1 MPa. In this instance the profile will usually be square or rectangular although it need not be and the travel distance will typically be less than 5 mm, e.g. 3 to 4 mm. It is usually necessary for such seals to be seated in a snug recess which supports three of the four nominal (or actual) sides of the seal to encourage expansion in the working direction only (or at least substantially).

Whilst the above description describes the seal ends 8A, 8B as being in abutting relations, in use, it is also possible to use the seal 1 such that the ends 8A, 8B do not abut. When doing so it is usually necessary to ensure that the relatively thin closure walls 9A, 9B are properly and effectively supported during expansion and use to protect against rupture. This may be carried out, for example, by locating the seal 1 snugly between two walls, each end 8A, 8B of the seal 1 abutting or at least lying proximate a respective one of the walls. Again, the relatively thin closure walls 9A, 9B do not impede expansion of the seal as the internal pressure increases, thereby ensuring that an even sealing action is generated along the entire length of the seal 1.

Typically, the closure walls 9 and hollow body 2 will be formed from the same material. However, it is also possible to form the parts from different materials. The different parts of the hollow body 2 may be formed from different materials, for example the flat bearing surface 5 and curved portion 6. One or both of the walls 5, 6 may be coated, in whole or in part, or provided with a continuous or discontinuous surface finish, for example by coextruding. Surface formations may be provided, say formed from a material which is relatively softer or harder than the material from which the respective wall is composed.

Clearly, the wall thickness of the seal will depend on the internal pressure to which the seal is to be inflated. Moreover, the material or materials from which the seal is fabricated will be dependent upon the use to which the seal is to be put as well as the operating parameters (internal and sealing pressure, operating temperature *etc).* Also, the profile shape will be use dependent.

## Claims

1. A seal (1) comprising an elongate hollow body (2) which is sealed at at least one end (8) by a sealing wall (9), wherein the hollow body (2) has a minimum wall thickness X and the sealing wall (9) has a maximum wall thickness Y, **characterised in that** Y<X.

2. A seal (1) according to Claim 1, wherein the minimum wall thickness X is from 1 to 10 mm, preferably from 2.0 to 5.0 mm.

3. A seal (1) according to Claim 1 or 2, wherein the maximum wall thickness Y is from 0.2 to 3.0 mm, preferably from 1.0 to 2.0 mm.

4. A seal (1) according to any preceding Claim, further comprising means (10), for example a valve stem, for inflating and/or deflating the seal (1).

5. A seal (1) according to any preceding Claim, wherein, in a relaxed state, at least part of the sealing wall (9) is bowed, folded or concertinaed and/or extends into the hollow body (2).

6. A seal (1) according to any preceding Claim, wherein, in a relaxed state, the surface area of the sealing wall (9) is greater than that of the space defined between the walls (3) of the hollow body (2), when viewed in transverse section.

7. A seal (1) according to any preceding Claim, having a first, flat bearing surface (5) and a second, preferably curved, bearing surface (6), the first and second surfaces being arranged to bear on mutually facing surfaces, in use.

8. A seal (1) according to Claim 7, wherein the flat bearing surface (5) has a wall thickness greater than that of the second, preferably curved, bearing surface (6).

9. A seal (1) according to Claim 7 or 8, wherein, upon inflation to a working pressure, the second (6), preferably curved, bearing surface is stretched.

10. A seal (1) according to any of Claims 7, 8 or 9, wherein, the wall thickness of the flat bearing surface (5) remains substantially unchanged upon inflation of the seal to a working pressure.

11. A seal (1) according to any preceding Claim, wherein, upon inflation to a working pressure, the sealing wall (9) is stretched.

12. Use of a seal according to any preceding Claim, wherein the closure wall is supported against expansion beyond the end of the hollow body.

13. Use of a seal according to Claim 12, wherein the ends of the hollow body are provided in abutting relations.

14. A method of sealing, the method comprising locating an inflatable seal between surfaces to be sealed, the inflatable seal comprising a hollow elongate body which is sealed at at least one end by a sealing wall, wherein the hollow body has a minimum wall thickness X and the sealing wall has a maximum wall thickness Y and Y<X, and supporting the sealing wall so as to prevent expansion thereof beyond the end of the hollow body as fluid is introduced into the seal.

## Patentansprüche

1. Dichtung (1), die einen länglichen Hohlkörper (2) umfasst, der an mindestens einem Ende (8) durch eine Dichtwand (9) abgedichtet ist, wobei der Hohlkörper (2) eine minimale Wandstärke X aufweist und die Dichtwand (9) eine maximale Wandstärke Y aufweist, **dadurch gekennzeichnet, dass** Y<X.

2. Dichtung (1) nach Anspruch 1, wobei die minimale Wandstärke X von 1 bis 10 mm, vorzugsweise von 2,0 bis 5,0 mm, beträgt.

3. Dichtung (1) nach Anspruch 1 oder 2, wobei die maximale Wandstärke Y von 0,2 bis 3,0 mm, vorzugsweise von 1,0 bis 2,0 mm, beträgt.

4. Dichtung (1) nach einem der vorhergehenden Ansprüche, die ferner Vorrichtungen (10), wie zum Beispiel einen Ventilschaft, zum Aufblasen und/oder Entleeren der Dichtung (1) umfasst.

5. Dichtung (1) nach einem der vorhergehenden Ansprüche, wobei in einem entspannten Zustand mindestens ein Teil der Dichtwand (9) gebogen, gefalzt oder ziehharmonikaähnlich gefaltet ist und/oder sich in den Hohlkörper (2) hinein erstreckt.

6. Dichtung (1) nach einem der vorhergehenden Ansprüche, wobei in einem entspannten Zustand der Oberflächenbereich der Dichtwand (9) größer als der des Raumes ist, der zwischen den Wänden (3) des Hohlkörpers (2) definiert wird, wenn er im Querschnitt betrachtet wird.

7. Dichtung (1) nach einem der vorhergehenden Ansprüche, die eine erste flache Trägeroberfläche (5) und eine zweite, vorzugsweise gekrümmte, Trägeroberfläche (6) aufweist, wobei die erste und zweite Oberfläche angeordnet sind, um während der Verwendung auf einander zugewandten Oberflächen zu tragen.

8. Dichtung (1) nach Anspruch 7, wobei die flache Trägeroberfläche (5) eine Wandstärke aufweist, die größer als die der zweiten, vorzugsweise gekrümmten, Trägeroberfläche (6) ist.

9. Dichtung (1) nach Anspruch 7 oder 8, wobei die zweite (6), vorzugsweise gekrümmte, Trägeroberfläche nach dem Aufblasen mit einem Arbeitsdruck gestrafft ist.

10. Dichtung (1) nach einem der Ansprüche 7, 8 oder 9, wobei die Wandstärke der flachen Trägeroberfläche (5) nach dem Aufblasen der Dichtung mit einem Arbeitsdruck im Wesentlichen unverändert bleibt.

11. Dichtung (1) nach einem der vorhergehenden Ansprüche, wobei die Dichtwand (9) nach dem Aufblasen mit einem Arbeitsdruck gestrafft ist.

12. Verwendung einer Dichtung nach einem der vorhergehenden Ansprüche, wobei die Verschlusswand gegen eine Ausdehnung über das Ende des Hohlkörpers hinaus unterstützt wird.

13. Verwendung einer Dichtung nach Anspruch 12, wobei die Enden des Hohlkörpers in angrenzenden Relationen bereitgestellt werden.

14. Verfahren des Abdichtens, wobei das Verfahren Folgendes umfasst: Platzieren einer aufblasbaren Dichtung zwischen abzudichtenden Oberflächen, wobei die aufblasbare Dichtung einen hohlen länglichen Körper umfasst, der an mindestens einem Ende durch eine Dichtwand abgedichtet ist, wobei der Hohlkörper eine minimale Wandstärke X aufweist und die Dichtwand eine maximale Wandstärke Y aufweist und Y<X, und Unterstützen der Dichtwand, um ihre Ausdehnung über das Ende des Hohlkörpers hinaus zu verhindern, während Flüssigkeit in die Dichtung eingeführt wird.

## Revendications

1. Joint d'étanchéité (1) comprenant un corps creux allongé (2) qui est étanchéifié au niveau d'au moins une extrémité (8) par une paroi d'étanchéité (9), dans lequel le corps creux (2) a une épaisseur de paroi minimum X et la paroi d'étanchéité (9) a une épaisseur de paroi maximum Y, **caractérisé en ce que** Y<X.

2. Joint d'étanchéité (1) selon la revendication 1, dans lequel l'épaisseur de paroi minimum X mesure de 1 à 10 mm, de préférence de 2,0 à 5,0 mm.

3. Joint d'étanchéité (1) selon la revendication 1 ou 2, dans lequel l'épaisseur de paroi maximum Y mesure de 0,2 à 3,0 mm, de préférence de 1,0 à 2,0 mm.

4. Joint d'étanchéité (1) selon l'une quelconque des revendications précédentes, comprenant en outre un moyen (10), par exemple une tige de soupape, pour gonfler et/ou dégonfler le joint d'étanchéité (1).

5. Joint d'étanchéité (1) selon l'une quelconque des revendications précédentes, dans lequel, dans un état relâché, au moins une partie de la paroi d'étanchéité (9) est arquée, pliée ou en accordéon et/ou se déploie dans le corps creux (2).

6. Joint d'étanchéité (1) selon l'une quelconque des revendications précédentes, dans lequel, dans un état relâché, la superficie de la paroi d'étanchéité (9) est supérieure à celle de l'espace défini entre les parois (3) du corps creux (2), en vue en coupe transversale.

7. Joint d'étanchéité (1) selon l'une quelconque des revendications précédentes, possédant une première surface d'appui plane (5) et une deuxième surface d'appui de préférence incurvée (6), les première et deuxième surfaces étant disposées pour appuyer sur des surfaces tournées l'une vers l'autre, en utilisation.

8. Joint d'étanchéité (1) selon la revendication 7, dans lequel la surface d'appui plane (5) a une épaisseur de paroi supérieure à celle de la deuxième surface d'appui de préférence incurvée (6).

9. Joint d'étanchéité (1) selon la revendication 7 ou 8, dans lequel, lors du gonflage à une pression de service, la deuxième surface d'appui de préférence incurvée (6), est étirée.

10. Joint d'étanchéité (1) selon l'une quelconque des revendications 7, 8 ou 9, dans lequel l'épaisseur de paroi de la surface d'appui plane (5) reste sensiblement inchangée lors du gonflage du joint d'étanchéité à une pression de service.

11. Joint d'étanchéité (1) selon l'une quelconque des revendications précédentes, dans lequel, lors du gonflage à une pression de service, la paroi d'étanchéité (9) est étirée.

12. Application d'un joint d'étanchéité selon l'une quelconque des revendications précédentes, dans laquelle la paroi de fermeture est supportée de manière à empêcher son expansion au-delà de l'extrémité du corps creux.

13. Application d'un joint d'étanchéité selon la revendication 12, dans laquelle les extrémités du corps creux sont prévues en butée.

14. Procédé d'étanchéité, le procédé consistant à positionner un joint d'étanchéité gonflable entre des surfaces à étanchéifier, le joint d'étanchéité gonflable comprenant un corps creux allongé qui est étanchéifié au niveau d'au moins une extrémité par une paroi d'étanchéité, dans lequel le corps creux a une épaisseur de paroi minimum X et la paroi d'étanchéité a une épaisseur de paroi maximum Y et Y<X, et à supporter la paroi d'étanchéité de manière à empêcher l'expansion de celle-ci au-delà de l'extrémité du corps creux tandis qu'un fluide est introduit dans le joint d'étanchéité.
